# EUROPÄISCHE PATENTSCHRIFT

(11) **EP 1 054 798 B1**
(45) Veröffentlichungstag und Bekanntmachung des Hinweises auf die Patenterteilung: **08.12.2004**
(21) Anmeldenummer: 99973481.7
(22) Anmeldetag: 16.09.1999
(51) Int. Cl.: B60S 1/38, B60S 1/40

(54) **SCHEIBENWISCHER**
WINDSCREEN WIPER
ESSUIE-GLACE

(30) Priorität: 21.12.1998 DE 19859077
(43) Veröffentlichungstag der Anmeldung: 29.11.2000
(73) Patentinhaber: ROBERT BOSCH GMBH, 70442 Stuttgart (DE)
(72) Erfinder: DIETRICH, Jan, D-77815 Buehl (DE); KOTLARSKI, Thomas, D-53474 Bad Neuenahr (DE)
(86) Internationale Anmeldenummer: PCT/DE1999/002947
(87) Internationale Veröffentlichungsnummer: WO 2000/037293

(56) Entgegenhaltungen:
- DE-A- 2 615 292

## Beschreibung

### Stand der Technik

Die Erfindung betrifft einen Scheibenwischer nach der Gattung des Hauptanspruchs. Derartige Scheibenwischer sind beispielsweise aus der EP-PS 0 528 643 bekannt und zeichnen sich gegenüber herkömmlichen Wischblättern dadurch aus, daß anstelle eines aufwendigen Tragbügelgestells die vom Wischarm aufgebrachte Auflagekraft über einen sogenannten Flachbalken auf die Wischleiste übertragen wird. Der Flachbalken besteht in der Regel aus einem vorgebogenen Federstahl oder einem Kunststoffstab. Die Wischleiste ist an den Flachbalken angeklebt oder sie wird vom Flachbalken in dafür vorgesehenen Aussparungen aufgenommen.

Für Tragbügelgestelle aufweisende Scheibenwischer ist es aus der DE-OS 26 15 292 bekannt, den Tragbügel eines Wischblatts aus zwei Bügelteilen zu bilden, die stufenartig abgesetzten Aussparungen bzw. Vorsprünge aufweisen. In Zusammenbaustellung greifen die Vorsprünge in die Aussparungen und sind über einen, die Vorsprünge durchsetzenden Gelenkbolzen drehbar miteinander verbunden. Über das so gebildete Gelenk sind die Bügelteile gegeneinander verschwenkbar. Auf diese Weise erhält man ein einfach montierbares Tragbügelgestell für ein Wischblatt.

Vorteile der Erfindung

Der erfindungsgemäße Scheibenwischer mit den Merkmalen des Hauptanspruchs hat den Vorteil, daß durch das im Flachbalken eingebrachte Gelenk der Scheibenwischer exakt auch an eine extreme Scheibenkrümmung angepaßt werden kann. Der in unbelastetem Zustand gekrümmte Flachbalken muß einen für eine vorgegebene Auflagekraftverteilung während des Wischbetriebs genau einzuhaltenden Krümmungsverlauf in entlasteter Position aufweisen. Durch die Teilung des Flachbalkens in mindestens zwei Teilstücke wird die zu bearbeitende Bauteilgröße und damit die Werkzeugkosten geringer, wobei im Gegenzug die zu erwartenden Teiletoleranzen besser eingehalten werden können.

Durch die in den Unteransprüchen aufgeführten Merkmale sind vorteilhafte Weiterbildungen des Scheibenwischers nach dem Hauptanspruch möglich. So ist es montagetechnisch besonders einfach, wenn das Gelenk im Bereich des Anschlußstückes angeordnet ist. Das Anschlußstück kann dann seinerseits eine Führungs-, Anschlags- und Haltefunktion übernehmen. Werden ein oder mehrere Gelenke außerhalb des Bereiches des Anschlußstückes angeordnet, kann der Flachbalken noch genauer an den Kurvenverlauf der zu wischenden Scheibe angepaßt werden.

Die Auflagekraftverteilung, die maßgeblich für die Wischqualität verantwortlich ist, kann optimal eingestellt werden, wenn die am Gelenk bzw. an den Gelenken federverbundenen Teilstücke zueinander federbelastet sind. Die Gelenke können dann unter Vorspannung auf die Oberfläche der zu wischenden Scheibe aufgelegt werden. Die Vorspannung kann sich dabei aus der Eigenelastizität der Federbalkenteilstücke zum einen und den gefederten Gelenken zum anderen zusammensetzen.

Einen besonders einfachen Anschlag gegen rückwärtiges Überbiegen des Gelenkes bzw. der Gelenke wird erreicht, wenn die beiden, das Gelenk bildende Flachbalkenteilstücke jeweils mindestens einen Fortsatz aufweisen, der das jeweils andere Teilstück überragt. Die Fortsätze stützen sich dann an den jeweilig anderen Teilstücken ab und verhindern, daß der Flachbalken von der Scheibe weggeklappt wird. Die Federung der Gelenke läßt sich dabei besonders einfach erreichen, indem ein elastisches Element zwischen jedem Teilstück und dem das Teilstück überragenden Fortsatz eingebracht ist. Das elastische Element ist im einfachsten Fall durch den Gummi der Wischleiste gebildet. Auf diese Weise wird ein äußerst kostengünstiges Flachbalkenwischblatt bereitgestellt, das über die Vorspannung und die Federwahl eine optimale Auflagekraftverteilung bereitstellt.

### Zeichnung

In der Zeichnung sind Ausführungsbeispiele des erfindungsgemäßen Scheibenwischers dargestellt und in der nachfolgenden Beschreibung näher erläutert. Es zeigen
Figur 1 ein an einen Wischerarm angeschlossenen Scheibenwischer von der Seite in einem ersten Ausführungsbeispiel,
Figur 2 ein Detail nach Linie II in Figur 1 in Explosionsdarstellung,
Figur 3 eine Darstellung analog zu Figur 2 in Zusammenbaustellung nach einem zweiten Ausführungsbeispiel, Figur 4 ein Detail nach Linie IV in Figur 1 und
Figur 5 das Detail der Figur 4 in auseinandergezogener Darstellung.

### Beschreibung

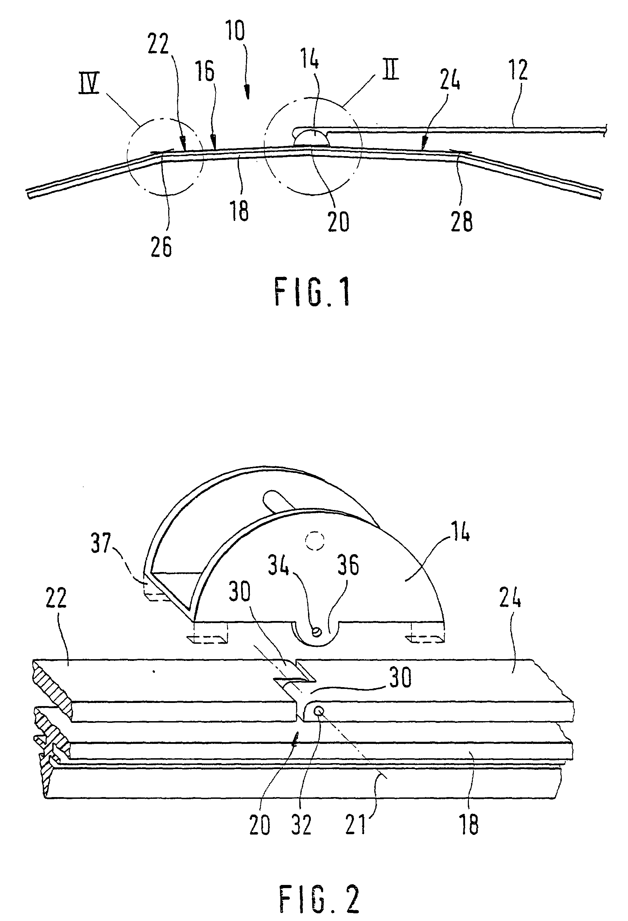

In Figur 1 ist ein Scheibenwischer 10 dargestellt, der von einem Wischerarm 12 antreibbar ist. Der Wischerarm 12 greift an einem Anschlußstück 14 des Scheibenwischers 10 an, das seinerseits in Verbindung mit einem Flachbalken 16 steht, der in Figur 1 lediglich als Linie dargestellt ist. An der dem Anschlußstück 14 gegenüberliegenden Seite des Flachbalkens 16 ist eine Wischleiste 18 angeordnet, die auf eine nicht dargestellte Windschutzscheibe eines Kraftfahrzeugs auflegbar ist. Die Wischleiste 18 ist im Ausführungsbeispiel angeklebt, sie kann jedoch auch aufvulkanisiert oder in Aussparungen des Flachbalkens 16 eingeclipst sein. Auch ein Einlegen einer oder zweier Flachbalken 16 in Ausnehmungen der Wischleiste 18 ist möglich.

Im Bereich des Anschlußstücks 14 weist der Flachbalken 16 ein erstes Gelenk 20 auf, das den Flachbalken 16 in mindestens ein erstes Teilstück 22 und ein zweites Teilstück 24 trennt. Auch außerhalb des Anschlußstücks 14, im Bereich des ersten Teilstücks 22 bzw. des zweiten Teilstücks 24 sind ein zweites Gelenk 26 und ein drittes Gelenk 28 angeordnet, das die ersten bzw. die zweiten Teilstücke 22 bzw. 24 in weitere Teilstücke unterteilt. Die Gelenkachse 21 (Figur 2) des Gelenks 20 ist quer zur Längsstreckung des Flachbalkens 16 und in Richtung dessen Breite ausgerichtet.

In Figur 2 ist in Explosionsdarstellung das erste Gelenk 20 gezeigt. Die beiden Teilstücke 22 und 24 weisen im Bereich des Gelenks 20 jeweils eine Stufe 30 auf, mit der sie sich in Zusammenbaustellung gegenseitig überlappen. Die Stufen 30 sind von einer Bohrung 32 durchsetzt, die im montierten Zustand miteinander fluchten und einen Gelenkbolzen (nicht dargestellt) aufnehmen. Das Anschlußstück 14 liegt auf der der Wischleiste 18 gegenüberliegenden Seite auf dem Flachbalken 16 auf und übergreift mit einer, eine Bohrung 34 aufweisenden Blechlasche 36 den Gelenkbereich. Die Bohrung 34 fluchtet mit der Bohrung 32 und ist im Montagezustand ebenfalls vom nicht dargestellten Bolzen durchsetzt.

Das Anschlußstück 14 bildet durch seine Ausdehnung in Längserstreckung des Scheibenwischers einen Anschlag, der ein Verschwenken der beiden Teilstücke 22 und 24 in Richtung weg von der zwischen den Scheibe verhindert.

In Figur 2 ist angedeutet, daß das Anschlußstück 14 weitere Blechlaschen 37 aufweisen kann, die den Federbalken 16 umgreifen und einen Anschlag in die andere Richtung bilden. Anschläge sind jedoch nicht unbedingt notwendig, da die am Flachbalken 16 befestigte Wischleiste 18 einem zu starken Einknicken des Gelenks 20 eine Rückstellkraft entgegensetzt.

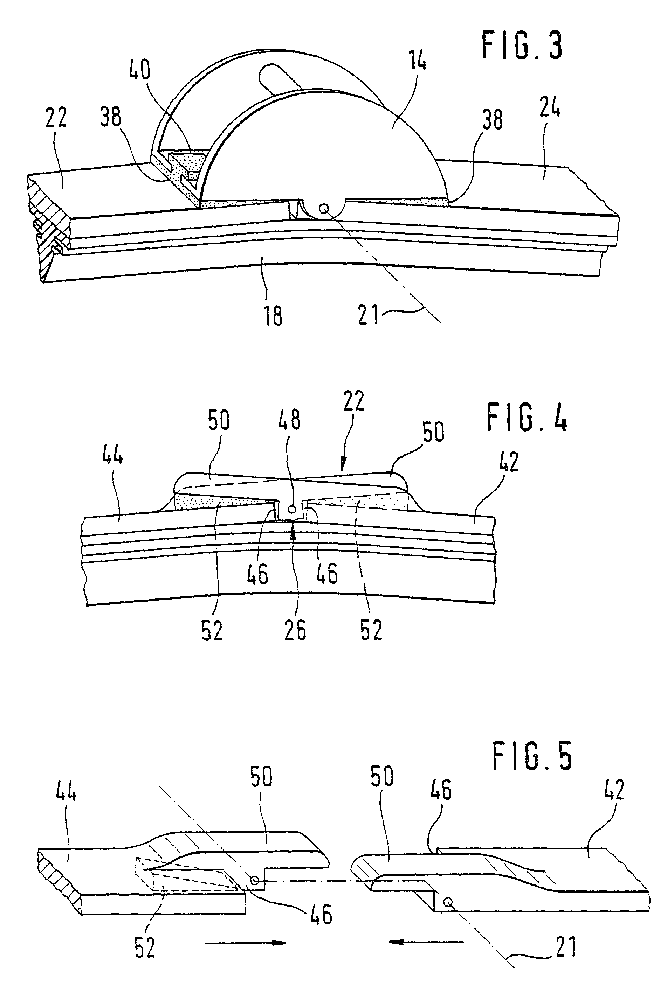

In Figur 3 ist ein weiteres Ausführungsbeispiel dargestellt, bei dem gleiche Teile mit gleichen Bezugszeichen versehen sind. Zwischen dem Anschlußstück 14 und den Teilstücken 22 bzw. 24 des Flachbalkens 16 sind jeweils ein keilförmiges elastisches Mittel in Form eines Gummipuffers 38 eingebracht, die die Teilstücke 22 aus der Ebene heraus in eine leichte Knickstellung zwingen. Der Betrag des Auslenkens aus der Ebene wird dabei bestimmt durch die Größe des Gummipuffers sowie dessen Federkonstante im Verhältnis zur Federkonstanten der Wischleiste, die dieser Knickeinstellung entgegenwirkt.

Der Gummipuffer 38 ist im Ausführungsbeispiel nach Figur 3 ein separates Teil, das mit einem einen Kragen aufweisenden Ansatzstück 40 am Anschlußstück 14 befestigt ist. Das Anschlußstück 14 weist dazu eine das Ansatzstück 40 aufnehmende Aussparung auf, die vom Kragen des Ansatzstückes 40 umgriffen wird.

In den Figuren 4 und 5 ist das zweite Gelenk 26 dargestellt, das das erste Teilstück 22 in zwei Unterteilstücke 42 und 44 teilt und diese gelenkig miteinander verbindet. Die Unterteilstücke 42 und 44 weisen dazu eine der Stufe 30 analoge Stufe 46 auf, und sind ebenfalls von einer fluchtenden Bohrung durchsetzt, die ihrerseits einen Gelenkbolzen 48 aufnimmt. In Zusammenbaustellung ist die Bolzenachse koaxial zur Gelenkachse 21.

Zur Anschlagsbegrenzung und zum Zwecke der besseren seitlichen Führung weisen die Teilstücke 42 bzw. 44 jeweils einen Fortsatz 50 auf, der sich von der Stufe 46 ausgehend in Richtung des jeweilig anderen Teilstücks 44 bzw. 42 erstreckt. Der Fortsatz 50 ist auf der der Wischleiste 18 gegenüberliegenden Seite oberhalb des Flachbalkens 16 angeordnet und liegt somit in Zusammenbaustellung auf dem jeweilig anderen Teilstück 42 bzw. 44 im Sinne einer Anschlagsbegrenzung auf.

Es ist prinzipiell auch möglich, nur einen Fortsatz 50 pro Gelenk vorzusehen.

Zwischen dem Fortsatz 50 und dem jeweiligen, vom Fortsatz 50 übergriffenen Teilstück 42 bzw. 44 ist ein elastisches Element in Form eines Gummipuffers 52 eingebracht. Dieser Gummipuffer 52 ist von keilförmiger Gestalt und zwingt die beiden Teilstücke 42 bzw. 44 in eine der Scheibenkrümmung zugewandten Knickstellung. Analog zum ersten Gelenk 20 geben auch hier die geometrischen Größen des Gummipuffers sowie die Federkonstanten des Gummipuffers 52 und der Wischleiste 18 die Knickstellung des unbelasteten Wischblatts vor. Der Gummipuffer 52 ist hier als separates Teil dargestellt, er kann jedoch auch Teil der Wischleiste 52 sein und sich von dieser durch Aussparungen im Flachbalken 16 in den Gelenkbereich erstrecken. Damit könnte der Gummipuffer 52 auch eine Haltefunktion der Wischleiste 18 zum Flachbalken 16 übernehmen.

Im belasteten Zustand, d.h. wenn der Scheibenwischer 10 auf die zu wischende Scheibe gepreßt ist, wird der vom Wischerarm 12 aufgebrachte Anpressdruck über das Anschlußstück 14 auf den Flachbalken 16 und von diesem auf die Wischleiste 18 übertragen. Die geometrische Querschnittsform, die Krümmung des unbelasteten Wischblatts sowie die Materialkonstanten der Wischleiste 18 und des Federbalkens nehmen dabei Einfluß auf die Auflagekraftverteilung der Wischleiste 18 zu Scheibe. Durch die Gelenke 22, 26, 28 sowie deren Gummipuffer 38, 52 kann ferner die Auflagekraftverteilung unabhängig von den Daten des Flachbalkens 16 beeinflußt werden. Um auch extremen Scheibenkrümmungsverläufe exakt folgen zu können, kann es von Vorteil sein, wenn mehrere Gelenke über den Flachbalken 16 verteilt angeordnet sind. Dabei ist es nicht zwingend, die Gelenke bezogen auf die Längserstreckung des Flachbalkens 16 symmetrisch anzuordnen.

Es ist ferner denkbar, statt der Fortsätze 50 ein dem Anschlußteil 14 nachgebildetes Anschlagteil - das die für die Wischarmhalterung notwendigen seitlichen Wangen sowie den Gelenkbolzen nicht enthalten - vorzusehen. Dieses Anschlußstück würde dann analog auf der der Wischleiste 18 gegenüberliegenden Seite aufgebracht und über den Gelenkbolzen fixiert. Eine Anschlagsbegrenzung kann dann über krallenartige Fortsätze 38 erfolgen.

Liegt der Flachbalken 16 in einer die Wischleiste 18 der Länge nach durchsetzenden Aussparung oder in seitlichen Längsnuten der Wischleiste 18, kann auf die Gummipuffer 38, 52 verzichtet werden. Auch die Fortsätze 50 sind dann unter Umständen entbehrlich.

## Patentansprüche

1. Scheibenwischer zum Wischen von Scheiben insbesondere von Kraftfahrzeugen, mit einem mit einem Wischerarm (12) verbindbaren Anschlußstück (14), das mit einem Flachbalken (16) verbunden ist, und mit einer mit dem Flachbalken (16) verbundenen Wischleiste (18), die auf die zu wischende Scheibe auflegbar ist, **dadurch gekennzeichnet, daß** der Flachbalken (16) mindestens ein Gelenk (20, 26, 28) aufweist, dessen Gelenkachse (21) quer zur Längserstreckung des Flachbalkens (16) und in Richtung dessen Breite ausgerichtet ist.

2. Scheibenwischer nach Anspruch 1, **dadurch gekennzeichnet, daß** das Gelenk (20) im Bereich des Anschlußstückes angeordnet ist.

3. Scheibenwischer nach einem der Ansprüche 1 oder 2, **dadurch gekennzeichnet, daß** mindestens ein zweites Gelenk (26, 28) außerhalb des Bereiches des Anschlußstückes (14) angeordnet ist.

4. Scheibenwischer nach einem der vorhergehenden Ansprüche, **dadurch gekennzeichnet, daß** das Gelenk (20, 26, 28) zwei Teilstücke (22, 24, 42, 44) miteinander verbindet, die zueinander federbelastet sind.

5. Scheibenwischer nach einem der vorhergehenden Ansprüche, **dadurch gekennzeichnet, daß** die beiden, das Gelenk bildende Flachbalkenteilstücke (42, 44) jeweils mindestens einen Fortsatz (50) aufweisen, der das jeweils andere Teilstück (44, 42) überragt.

6. Scheibenwischer nach Anspruch 5, **dadurch gekennzeichnet, daß** zwischen dem Teilstück (42, 44) und dem das Teilstück (42, 44) überragenden Fortsatz (50) ein elastisches Element (52) angeordnet ist.

7. Scheibenwischer nach Anspruch 6, **dadurch gekennzeichnet, daß** das elastische Element (52) Teil des die Wischleiste (18) bildenden Materials ist.

## Claims

1. Wiper for wiping windows in particular of motor vehicles, having a connecting component (14) which can be connected to a wiper arm (12) and is connected to a flat bar (16), and having a wiper strip (18) which is connected to the flat bar (16) and can be placed onto the window to be wiped, **characterized in that** the flat bar (16) has at least one hinge (20, 26, 28) whose hinge axis (21) is orientated transversely with respect to the longitudinal direction of the flat bar (16) and in the direction of the width thereof.

2. Wiper according to Claim 1, **characterized in that** the hinge (20) is arranged in the region of the connecting component.

3. Wiper according to either of Claims 1 and 2, **characterized in that** at least one second hinge (26, 28) is arranged outside the region of the connecting component (14).

4. Wiper according to one of the preceding claims, **characterized in that** the hinge (20, 26, 28) connects together two subsections (22, 24, 42, 44) which are spring-loaded with respect to one another.

5. Wiper according to one of the preceding claims, **characterized in that** the two flat-bar subsections (42, 44) forming the hinge each have at least one extension (50) which protrudes over the other subsection (44, 42) in each case.

6. Wiper according to Claim 5, **characterized in that** an elastic element (52) is arranged between the subsection (42, 44) and the extension (50) which protrudes over the subsection (42, 44).

7. Wiper according to Claim 6, **characterized in that** the elastic element (52) is part of the material forming the wiper strip (18).

## Revendications

1. Essuie-glace pour essuyer des vitres notamment de véhicules automobiles comprenant une pièce de raccordement (14) destinée à être reliée à un bras d'essuie-glace (12), cette pièce étant elle-même reliée à une poutre plate (16) et une lame d'essuyage (18) reliée à la poutre plate (16), cette lame s'appuyant sur la vitre à essuyer,
**caractérisé en ce que**
la poutre plate (16) comporte au moins une articulation (20, 26, 28) dont l'axe (21) est aligné transversalement à l'extension longitudinale de la poutre plate (16) et dans la direction de la largeur de celle-ci.

2. Essuie-glace selon la revendication 1,
**caractérisé en ce que**
l'articulation (20) se situe au niveau de la pièce de raccordement.

3. Essuie-glace selon l'une des revendications 1 ou 2,
**caractérisé en ce qu'**
au moins une seconde articulation (26, 28) est prévue à l'extérieur de la zone de la pièce de raccordement (14).

4. Essuie-glace selon l'une des revendications précédentes,
**caractérisé en ce que**
l'articulation (20, 26, 28) relie deux morceaux (22, 24, 42, 44), ces deux morceaux étant chargés par ressort l'un par rapport à l'autre.

5. Essuie-glace selon l'une des revendications précédentes,
**caractérisé en ce que**
les deux morceaux de poutre plate (42, 44) qui forment l'articulation ont chacun au moins un prolongement (50) qui déborde sur l'autre morceau (44, 42).

6. Essuie-glace selon la revendication 5,
**caractérisé par**
un élément élastique (52) prévu entre le morceau (42, 44) et le prolongement (50) qui déborde du morceau (42, 44).

7. Essuie-glace selon la revendication 6,
**caractérisé en ce que**
l'élément élastique (52) fait partie de la matière constituant la lame d'essuyage (18).
